# EUROPÄISCHE PATENTANMELDUNG

(11) **EP 1 750 035 A1**
(43) Veröffentlichungstag der Anmeldung: **07.02.2007**
(21) Anmeldenummer: 05016880.6
(22) Anmeldetag: 03.08.2005
(51) Int. Cl.: F16H 1/16

(54) **Stellantrieb mit einem im Getriebegehäuse ausgebildeten Stützring zur radialen Kraftabstützung eines im Getriebegehäuse gelagerten Schneckenrads**

(71) Anmelder: SIEMENS AKTIENGESELLSCHAFT, 80333 München (DE)
(72) Erfinder: Bucher, Peter, 97082 Würzburg (DE); Dietz, Armin, 97276 Margetshöchheim (DE); Klingler, Peter, 97277 Neubrunn (DE); Rückel, Norbert, 97199 Ochsenfurt (DE); Viernekes, Gerald, 97437 Hassfurt (DE); Zaps, Klaus, 97332 Volkach (DE)

(57) **Zusammenfassung**

Der Zahnkranz (11) des Schneckenrades (6) ist mit seiner Lagerfläche (17) auf der Stützflache (19) des Stützringes (12) gleitend gelagert. Zumindest ragt ein Segment des Stützringes (12) zumindest im Bereich des Schneckeneingriffs (18) so weit in den Zahnkranz (11) hinein, dass eine in Bezug auf die Abtriebsachse (AB) radial wirkende Komponente der Antriebskraft (FR) auf gleicher, gerader Wirklinie (WR/W1) über den Zahnkranz (11) des Schneckenrads (6) in den Stützring (12) des Gehäuses eingeleitet ist.

## Beschreibung

Die Erfindung betrifft einen Stellantrieb mit einer Antriebseinheit und einer Getriebeeinheit. Die Getriebeeinheit weist ein Getriebegehäuse mit einem auf der Gehäuse-Innenseite angeordneten zumindest segmentweise ausgebildeten, um eine Abtriebsachse angeordneten Stützring mit zumindest einer Stützfläche auf der Stützring-Außenseite auf. Zudem weist die Getriebeeinheit ein abtriebsseitiges, um die Abtriebsachse drehbar in dem Getriebegehäuse gelagertes Schneckenrad, mit einem zumindest teilweise als Hohlzylinder ausgebildeten Zahnkranz mit einer Verzahnung auf der Hohlzylinder-Außenseite und einer Lagerfläche auf der Hohlzylinder-Innenseite auf. Die Getriebeeinheit weist weiterhin eine antriebsseitige, um eine Antriebsachse drehbar in dem Getriebegehäuse gelagerte Schneckenwelle auf, die im Betrieb eine Antriebskraft auf das Schneckenrad ausübt.

Stellantriebe, beispielsweise Fensterheber-Antriebe oder Antriebe zur Betätigung des Schiebedaches in einem Kraftfahrzeug, sind bereits bekannt. Sie weisen einen Elektromotor sowie eine Getriebeeinheit mit einem Schneckenrad und mit einer als Schneckenwelle realisierte Getriebewelle auf. Die Motoreinheit besteht aus einem Motorgehäuse, einem Bürstengehäuse und einem innenliegenden Läufer. Der Läufer ist dabei als so genanntes Läuferpaket mit einer Vielzahl von auf der Motorwelle befestigten Lamellen ausgebildet. Die Getriebewelle und Motorwelle können auch als gemeinsame Antriebswelle einteilig ausgeführt sein.

Die am Ende der Getriebewelle sitzende Schneckenwelle steht im Eingriff mit dem Schneckenrad und treibt dieses an. Durch die schrägen Flanken der Zähne des Schneckenrads wird die im Bereich des Schneckeneingriffs eingeleitete Schneckenkraft vektoriell in eine zirkulare und in eine radiale Kraftkomponente aufgeteilt, wobei die zirkulare Komponente den eigentlichen Antrieb des Schneckenrads und somit des Stellantriebs bewirkt.

Aus der EP 0 869 295 A2 ist ein gattungsgleicher Stellantrieb bekannt. Die dort offenbarte Vorrichtung sieht elastische Dämpfungselemente zur Geräuschdämpfung vor, welche im Kraftfluss der radial wirkenden Komponente der Antriebskraft liegen und welche das Schneckenrad mit einer auf der Abtriebswelle sitzenden Scheibe koppeln. Gemäß der FIG. 5 der EP 0 869 295 A2 ist die radial wirkende Komponente der Antriebskraft über die mit dem Schneckenrad verbundene und auf der Abtriebswelle sitzende Scheibe in eine zusätzliche Lagerwelle im Zentrum des Schneckenrads sowie über einen seitlich umlaufenden Stützring im Getriebegehäuse abgeleitet.

Befindet sich allerdings ein durch den Stellantrieb zu betätigendes Element, wie z.B. ein Seitenfenster oder ein Schiebedach eines Kraftfahrzeugs, in einer Endlage, wie z.B. im geschlossenen Zustand, so liegt an der Verzahnung des Schneckenrads eine ständige Schneckenkraft an. Problematisch ist dieser Zustand dann, wenn es insbesondere bei Hitze zu einer Verformung des üblicherweise aus einem Kunststoff gefertigten Schneckenrads kommt. Das Schneckenrad wird dann über die im Bereich des Eingriffs radial wirkende Komponente der Schneckenkraft in gewissen Umfang eingedellt. Die dabei so entstandene Verformung führt zu einem ungleichmäßigen Lauf sowie zu Verzahnungsfehlern mit einer fehlerhaften Eingriffsüberdeckung. Eine Verkürzung der Lebensdauer des Stellantriebs durch Verschleiß ist die Folge.

Die oben genannten Probleme werden durch den in der EP 0 869 295 A2 vorgeschlagenen Stellantrieb allerdings nur zum Teil behoben. Durch den Versatz der Kraftvektoren, insbesondere der radialen Komponente der Schneckenkraft und der dieser entgegenwirkenden Reaktionskraft am umlaufenden Stützring, wirkt ein Drehmoment auf den Zahnkranz des Schneckenrades, das zusätzliche Verformungen hervorrufen kann und das zusätzlich über eine Lagerwelle abgestützt wird.

Die Aufgabe der Erfindung besteht darin, einen Stellantrieb anzugeben, welcher einen einfacheren Aufbau aufweist und bei welchem die oben genannten Probleme vermieden werden.

Diese Aufgabe wird durch einen Stellantrieb mit den im Anspruch 1 angegebenen Merkmalen gelöst. Vorteilhafte Ausgestaltungen und Weiterbildungen der Erfindung ergeben sich aus den abhängigen Ansprüchen 2 bis 10.

Bei dem erfindungsgemäßen Stellantrieb wird der Zahnkranz des Schneckenrads durch einen Stützring so abgestützt, dass eine in Bezug auf die Abtriebsachse radial wirkende Komponente der Schneckenkraft vollständig und momentenfrei über den Stützring in das Getriebegehäuse eingeleitet ist.

Der besondere Vorteil der Erfindung liegt darin, dass eine dauerhaft anstehende radial wirkende Komponente der Schneckenkraft quasi direkt am Entstehungsort, d.h. gegenüber dem Bereich des Eingriffs der Schneckenwelle im Zahnkranz, auf gleicher Kraft-Wirklinie abgefangen und in das Getriebegehäuse abgeleitet wird. Eine Verformung des Zahnkranzes mit Verzahnungs- und Eingriffsüberdeckungsfehler ist somit ausgeschlossen. Dadurch werden ein zunehmender Verschleiß und eine zunehmende Geräuschentwicklung vermieden.

In einer Ausführungsform ragt zumindest ein Segment des Stützringes zumindest im Bereich des Schneckeneingriffs mindestens bis auf Höhe der Antriebsachse der Schneckenwelle in den Hohlzylinder-Zahnkranz hineinragt, um die radial wirkende Schneckenkraft vollständig und momentenfrei aufzunehmen. Dadurch kann zudem vorteilhaft das Gewicht des Getriebegehäuses und somit der Materialaufwand für das Getriebegehäuse reduziert werden.

Insbesondere entspricht die Breite der Stützfläche des Stützringes mindestens einem Drittel des Außendurchmessers der Schneckenwelle. Dadurch ist eine vorteilhaft kompaktere Bauweise des Getriebegehäuses möglich.

In einer Ausführungsform ist die Stützfläche so auf dem Stützring angeordnet ist, dass die Antriebsachse der Schneckenwelle mittig zur Breite der Stützfläche liegt. Auf diese Weise erfolgt vorteilhaft eine möglichst zentrische Krafteinleitung in den Stützring.

Vorzugsweise weist der Zahnkranz des Schneckenrades einen tragenden Querschnitt auf, wobei die Abmessung des tragenden Querschnittes in radialer Richtung der einfachen bis fünffachen Zahnhöhe der Verzahnung des Zahnrades entspricht. Dadurch lässt sich vorteilhaft eine noch kompaktere Getriebeeinheit und somit ein noch kompakterer Stellantrieb herstellen.

In einer bevorzugten Ausführungsform ist der Außendurchmesser des Stützringes kleiner als der Innendurchmesser des Zahnkranzes. Zudem sind die Abmessungen so aufeinander abgestimmt, dass zwischen Außendurchmesser und Innendurchmesser vorteilhaft eine Spielpassung erzeugt ist.

In einer weiteren Ausführungsform weist der Außendurchmesser des Stützringes in Teilbereichen einen geringfügig reduzierten Wert auf. Die Teilbereiche mit dem reduzierten Außendurchmesser bilden Spalte zwischen der Stützfläche des Stützringes und der der Lagerfläche des Zahnkranzes aus. Dadurch wird die Reibung zwischen diesen beiden Flächen vorteilhaft reduziert.

Insbesondere kann die Reibung weiterhin reduziert werden, wenn zwischen der Stützfläche des Stützrings und der Lagerfläche des Zahnkranzes ein Schmiermittel, wie z.B. ein Lagerfett, zur Schmierung des Zahnrads, eingebracht ist. Die Spalte bilden dabei Fetttaschen als ein Reservoir für das Schmiermittel.

Der Stützring ist vorzugsweise als zumindest segmentweise konzentrisch umlautende, wandförmige Erhöhung oder als eine zylinderförmige Einformung des Getriebegehäusebodens ausgebildet. Dadurch lässt sich vorteilhaft das Gewicht der Getriebeeinheit und somit des gesamten Stellantriebs weiter reduzieren.

In einer weiteren Ausführungsform weist das Schneckenrad zumindest den Zahnkranz, eine Radscheibe und ein Abtriebsritzel oder eine Abtriebswelle auf, wobei die einzelnen Teile jeweils drehfest verbunden, insbesondere zusammen einstückig ausgeformt sind. Dadurch wird vorteilhaft die Bauteilanzahl für einen Stellantrieb reduziert.

In einer bevorzugten Ausführungsform sind das Getriebegehäuse und/oder das Schneckenrad aus einem Kunststoff, insbesondere aus einem Thermoplast, mittels eines Spritzgussverfahrens hergestellt. Dadurch ist ein besonders leichter und kostengünstig realisierbarer Stellantrieb möglich.

Ist der Kunststoff z.B. ein Polyamid (PA) oder ein Polypropylen (PP), so ist eine weitere Gewichtsreduzierung des Stellantriebs möglich. Durch die in mechanischer Hinsicht festen Eigenschaften des Polyamids kann das Bauvolumen des Getriebegehäuses und/oder das Bauvolumen des Schneckenrads weiter verringert werden.

Weitere vorteilhafte Eigenschaften der Erfindung ergeben sich aus deren beispielhafter Erläuterung anhand der Figuren. Es zeigt:
- FIG 1: eine Schnittzeichnung eines beispielhaften Stellantriebs mit einer Getriebeeinheit und mit einer Motoreinheit sowie mit einem in einem Getriebegehäuse gelagerten Schneckenrad gemäß der Erfindung,
- FIG 2: eine Schnittzeichnung durch eine Getriebeeinheit im Bereich des Eingriffs einer Schneckenwelle in ein Schneckenrad der Getriebeeinheit nach dem Stand der Technik,
- FIG 3A: eine Schnittzeichnung durch die Getriebeeinheit des Stellantriebs entlang der in FIG 1 eingetragenen Schnittlinie IIIA im Bereich des Eingriffs der Schneckenwelle mit einem Stützring, ausgebildet als zumindest eine segmentweise konzentrisch umlaufende, wandförmige Erhöhung des Getriebegehäusebodens gemäß der Erfindung,
- FIG 3B: eine Schnittzeichnung durch die Getriebeeinheit des Stellantriebs im Bereich des Eingriffs der Schneckenwelle mit einem Stützring, ausgebildet als eine zylinderförmige Einformung des Getriebegehäusebodens gemäß einer weiteren Ausführungsform der Erfindung, und
- FIG 4: eine perspektiv dargestellte Getriebeeinheit des Stellantriebs gemäß FIG 1 im geöffneten Zustand mit erfindungsgemäßen Teilbereichen des Stützringes mit einem reduzierten Außendurchmesser gemäß der Erfindung.

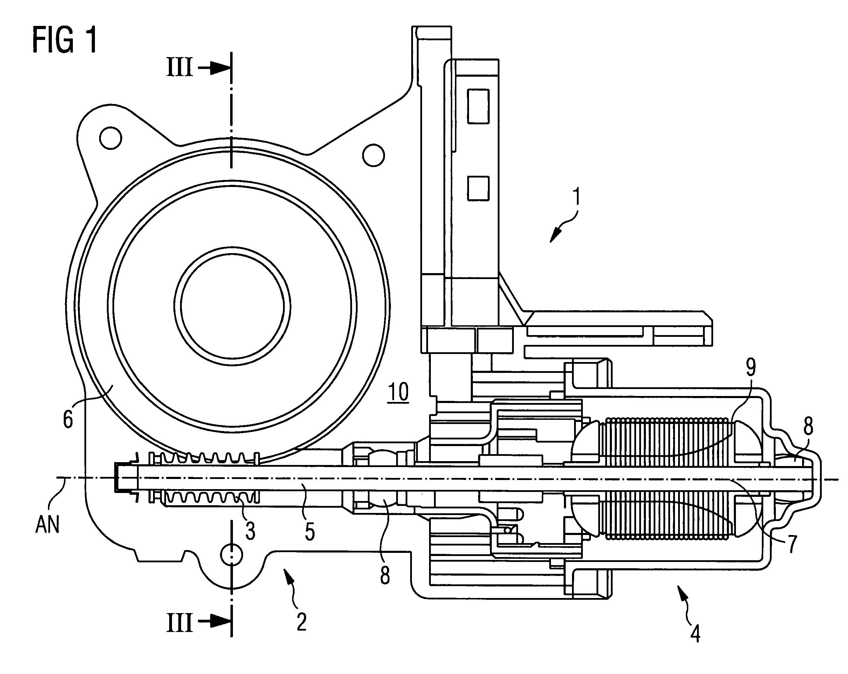

FIG 1 zeigt eine Schnittzeichnung eines beispielhaften Stellantriebs 1 mit einer Getriebeeinheit 2 und mit einer Motoreinheit 4 sowie mit einem in einem Getriebegehäuse 10 gelagerten Schneckenrad 6 gemäß der Erfindung. Im Getriebegehäuse 10 sind das Schneckenrad 6 sowie eine in das Schneckenrad eingreifende, als Schneckenwelle ausgebildete Getriebewelle 5 gelagert. Die Motoreinheit 4 besteht aus einem Motorgehäuse und einem darin untergebrachten Läufer 9 für den motorischen Antrieb. Mit dem Bezugszeichen 7 ist die Motorwelle bezeichnet, welche motorseitig und getriebeseitig in je einem Motorwellenlager 8 geführt ist. Im Beispiel der FIG 1 sind die Getriebewelle 5 bzw. die Schneckenwelle und die Motorwelle 7 einteilig ausgeführt. Alternativ können die Getriebewelle 5 und die Motorwelle 7 auch zweiteilig ausgeführt und über ein Kupplungselement drehfest miteinander verbunden sein.

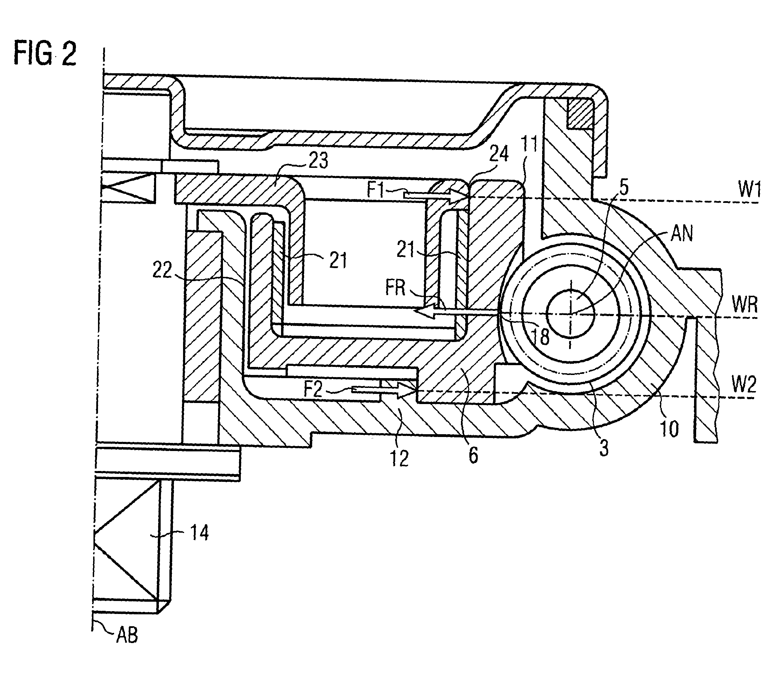

FIG 2 zeigt eine Schnittzeichnung durch eine Getriebeeinheit im Bereich des Eingriffs 18 einer Schneckenwelle 5 in ein Schneckenrad 6 der Getriebeeinheit nach dem Stand der Technik. Die FIG 2 zeigt im rechten Bereich eine Schneckenwelle 5, welche im Eingriffspunkt 18 in ein Verzahnung 11 des Schneckenrads 6 eingreift und welche eine Kraft 6 in das Schneckenrad einleitet, die im Folgenden als Antriebskraft bezeichnet wird. Im Beispiel der FIG 2 ist die radial wirkende Komponente der Antriebskraft FR eingezeichnet. Mit dem Bezugszeichen 3 ist die Verzahnung der Schneckenwelle 5 bezeichnet.

Die eingeleitete radial wirkende Antriebskraftkomponente FR wird dabei einerseits über die mit dem Schneckenrad verbundene und auf der Abtriebswelle 14 sitzende Scheibe 23 in eine zusätzliche Lagerwelle im Zentrum des Schneckenrads und andererseits über einen seitlich umlaufenden Stützring 12 im Getriebegehäuse 10 eingeleitet. In der FIG 2 sind dazu die jeweiligen im Getriebegehäuse 10 eingeleiteten Kräfte F1 und F2 zusammen mit ihrer jeweiligen Kraft-Wirklinie W1 und W2 eingezeichnet. Zwischen den Auflagekanten entstehen durch die eingeleitete radial wirkende Komponente der Antriebskraft FR Biegekräfte bzw. Biegemomente, die über die Auflagekanten sowie zum Teil über die elastischen Dämpfungselemente 21 aufgenommen werden.

Befindet sich, wie eingangs beschrieben, nun ein durch den Stellantrieb zu betätigendes Element in einer Endlage, wie z.B. ein Schiebedach im geschlossenen Zustand, so wird eine ständige Kraft FR auf die Verzahnung des Zahnkranzes 11 aufgebracht. Die im Bereich des Schneckeneingriffs 18 aufgebrachten Biegekräfte bzw. Biegemomente können nun, insbesondere bei Hitze, nachteilig eine Verformung des Schneckenrads bewirken.

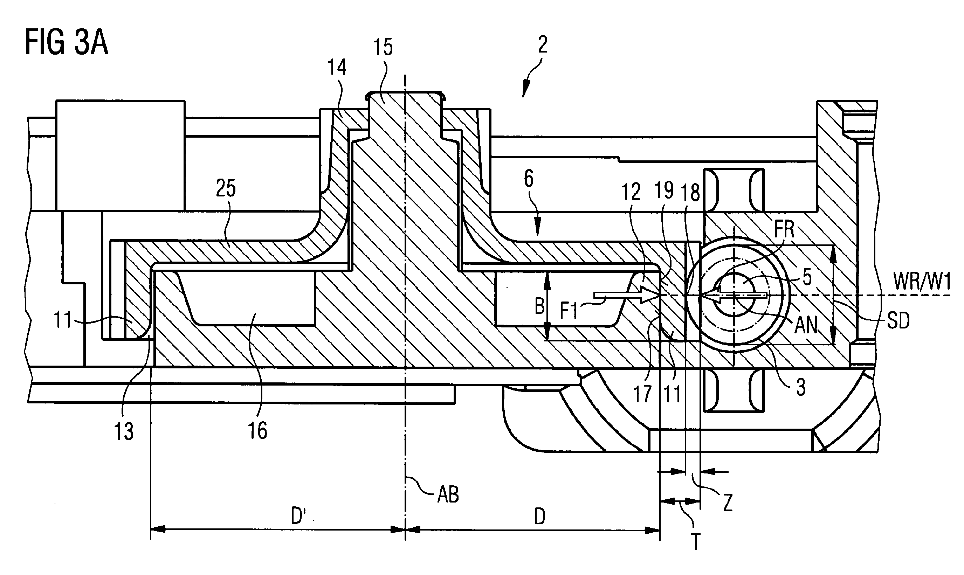

FIG 3A zeigt eine Schnittzeichnung durch die Getriebeeinheit 2 des Stellantriebs 1 entlang der in FIG 1 eingetragenen Schnittlinie III-III im Bereich des Eingriffs 18 der Schneckenverzahnung 3 mit einem Stützring 12, ausgebildet als zumindest eine segmentweise konzentrisch umlaufende, wandförmige Erhöhung des Getriebegehäusebodens gemäß der Erfindung.

Entsprechend der vorliegenden FIG 3A umfasst das einstückig ausgebildete Schneckenrad 6 eine Radscheibe 25. Dadurch entsteht eine im Bezug auf die Abtriebsachse AB umlaufende ringförmige Aussparung 16 zwischen Schneckenrad 6 und Getriebegehäuseboden. Diese Aussparung 16 trägt vorteilhaft zu einer Gewichtsersparnis der Getriebeeinheit 2 bei.

Gemäß der Erfindung ist nun der Zahnkranz 11 des Schneckenrads 6 durch einen Stützring 12 so abgestützt, dass eine in Bezug auf die Abtriebsachse AB radial wirkende Komponente der Antriebskraft FR vollständig und in Bezug auf das Schneckerad 6 momentenfrei über den Stützring 12 in das Getriebegehäuse 10 eingeleitet ist. Die in das Gebriebegehäuse 10 eingeleitete Kraft F1 ist entsprechend ihrer Kraft-Wirklinie W1 in der FIG 3A eingezeichnet. Es ist unmittelbar erkennbar, dass die beiden Kräfte FR und F1 auf einer gleichen gemeinsamen Kraft-Wirklinie WR/W1 liegen. Biegekräfte bzw. Biegemomente am Zahnkranz 11 des Schneckenrades 6 sind folglich ausgeschlossen.

Voteilhaft entspricht die Breite B der Stützfläche 19 des Stützringes 12 mindestens einem Drittel des Außendurchmessers SD der Schneckenwelle 5. Im Beispiel der FIG 3A entspricht die Breite B ca. 0,75.

Weiterhin weist der Zahnkranz 11 des Schneckenrades 6 gemäß der Erfindung einen tragenden Querschnitt auf, dessen Abmessung in radialer Richtung T in vorteilhafter Ausführung der einfachen bis fünffachen Zahnhöhe Z der Verzahnung des Zahnkranzes 11 entspricht. Im Beispiel der FIG 3A entspricht die Abmessung T etwa dem dreifachen.

Wie die vorliegende FIG 3A zeigt, ist gemäß der Erfindung der Außendurchmesser D des Stützringes 12 kleiner als der Innendurchmesser des Zahnkranzes 11. Die Abmessungen sind dabei so aufeinander abgestimmt, dass zwischen Außendurchmesser D und Innendurchmesser vorteilhaft eine Spielpassung erzeugt ist.

Einer Ausführungsform der Erfindung entsprechend weist der Außendurchmesser D des Stützringes 12 in Teilbereichen einen geringfügig reduzierten Wert D' auf. Die Teilbereiche mit dem reduzierten Außendurchmesser D' bilden Spalte 13 zwischen der Stützfläche 19 des Stützringes 12 und der Lagerfläche 17 des Zahnkranzes 11 aus. Dadurch wird die Reibung zwischen diesen beiden Flächen vorteilhaft reduziert.

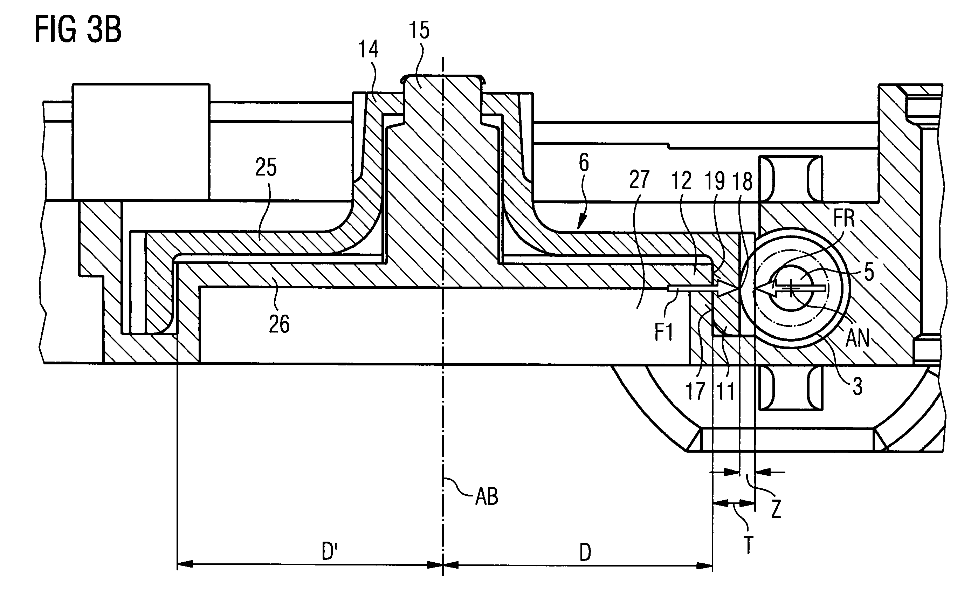

FIG 3B zeigt eine Schnittzeichnung durch die Getriebeeinheit 2 des Stellantriebs 1 im Bereich des Eingriffs 18 der Schneckenwelle 5 mit einem Stützring 12, ausgebildet als eine zylinderförmige Einformung 26 des Getriebegehäusebodens gemäß einer weiteren Ausführungsform der Erfindung.

Im Vergleich zur vorherigen FIG 3A wird eine weitere Gewichtsersparnis der Getriebeeinheit 2 dadurch erzielt, dass sich durch die zylinderförmige Einformung 26 nun eine zylinderförmige Aussparung 27 im Getriebegehäuseboden ausbildet, deren Volumen größer ist als im Vergleich zur ringförmigen Aussparung 16 gemäß FIG 3A.

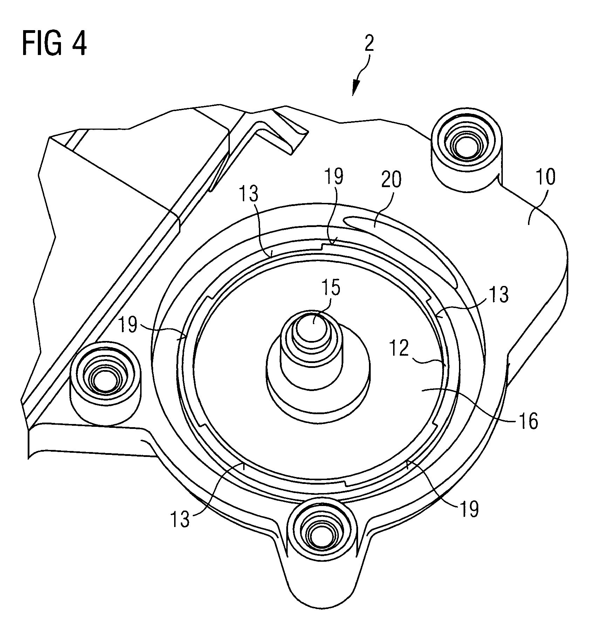

FIG 4 zeigt eine perspektiv dargestellte Getriebeeinheit 2 des Stellantriebs 1 gemäß FIG 1 im geöffneten Zustand mit erfindungsgemäßen Teilbereichen 13 des Stützrings 12 mit einem reduzierten Außendurchmesser D' gemäß der Erfindung. Im Beispiel der FIG 4 ist zudem aus Gründen der Übersichtlichkeit das Getriebegehäuse 10 ohne Schneckenrad 6 dargestellt.

Gemäß der Erfindung kann insbesondere zwischen den umlaufenden Spalten 13 als Teilbereiche mit reduziertem Außendurchmesser D' und der Lagerfläche 17 des Zahnkranzes 11 des Schneckenrads 6 ein Schmiermittel zur Reibungsverminderung eingebracht werden. Die zwischen den Spalten 13 verbleibende Stützfläche 19 stellt somit eine Tragfläche für den Zahnkranz 11 des Schneckenrads 6 dar. Mit dem Bezugszeichen 20 ist eine ovale Aussparung für die Schneckenverzahnung 3 der Schneckenwelle bzw. Antriebswelle 5 im Getriebegehäuse 10 bezeichnet.

## Patentansprüche

1. Stellantrieb mit einer Antriebseinheit (4) und einer Getriebeeinheit (2), wobei die Getriebeeinheit (2) aufweist:
- ein Getriebegehäuse (10) mit einem auf der Gehäuse-Innenseite angeordneten zumindest segmentweise ausgebildeten, um eine Abtriebsachse (AB) angeordneten Stützring (12) mit zumindest einer Stützfläche (19) auf der Stützring-Außenseite,
- ein abtriebsseitiges, um die Abtriebsachse (AB) drehbar in dem Getriebegehäuse (10) gelagertes Schneckenrad (6), mit einem zumindest teilweise als Hohlzylinder ausgebildeten Zahnkranz (11) mit einer Verzahnung auf der Hohlzylinder-Außenseite und einer Lagerfläche (17) auf der Hohlzylinder-Innenseite,
- eine antriebsseitige, um eine Antriebsachse (AN) drehbar in dem Getriebegehäuse (10) gelagerte Schneckenwelle (5), die im Betrieb eine Antriebskraft auf das Schneckenrad (6) ausübt,
**dadurch gekennzeichnet,**
**dass** der Zahnkranz (11) des Schneckenrades (6) mit seiner Lagerfläche (17) auf der Stützfläche (19) des Stützringes (12) gleitend gelagert ist, und
**dass** zumindest ein Segment des Stützringes (12) zumindest im Bereich des Schneckeneingriffs (18) so weil in den Zahnkranz (11) hineinragt, dass eine in Bezug auf die Abtriebsachse (AB) radial wirkende Komponente der Antriebskraft (FR) auf gleicher, gerader Wirklinie (WR/W1) über den Zahnkranz (11) des Schneckenrads (6) in den Stützring (12) des Gehäuses (10) eingeleitet ist.

2. Stellantrieb nach Anspruch 1, **dadurch gekennzeichnet, dass** zumindest ein Segment des Stützringes (12) zumindest im Bereich des Schneckeneingriffs (18) mindestens bis auf Höhe der Antriebsachse (AN) der Schneckenwelle (5) in den Hohlzylinder-Zahnkranz (11) hineinragt.

3. Stellantrieb nach Anspruch 1 oder 2, **dadurch gekennzeichnet, dass** die Breite (B) der Stützfläche (19) des Stützringes (12) mindestens einem Drittel des Außendurchmessers (SD) der Schneckenwelle (5) entspricht.

4. Stellantrieb nach einem der vorhergehenden Ansprüche, **dadurch gekennzeichnet, dass** die Stützfläche (19) so auf dem Stützring (12) angeordnet ist, dass die Antriebsachse (AN) der Schneckenwelle (5) mittig zur Breite (B) der Stützfläche (19) liegt.

5. Stellantrieb nach einem der vorhergehenden Ansprüche, **dadurch gekennzeichnet, dass** der Zahnkranz (11) des Schneckenrades (6) einen tragenden Querschnitt aufweist, wobei die Abmessung des tragenden Querschnittes in radialer Richtung (T) der einfachen bis fünffachen Zahnhöhe (Z) der Verzahnung des Zahnrades (11) entspricht.

6. Stellantrieb nach einem der vorhergehenden Ansprüche, **dadurch gekennzeichnet, dass** der Außendurchmesser (D) des Stützringes (12) kleiner ist als der Innendurchmesser des Zahnkranzes (11), und dass die Abmessungen so aufeinander abgestimmt sind, dass zwischen Außendurchmesser und Innendurchmesser eine Spielpassung erzeugt ist.

7. Stellantrieb nach einem der vorhergehenden Ansprüche, **dadurch gekennzeichnet, dass** der Außendurchmesser (D) des Stützringes (12) in Teilbereichen (13) einen geringfügig reduzierten Wert (D') aufweist.

8. Stellantrieb nach einem der vorhergehenden Ansprüche, **dadurch gekennzeichnet, dass** der Stützring (12) als zumindest segmentweise konzentrisch umlaufende, wandförmige Erhöhung (12) oder als eine zylinderförmige Einformung (26) des Getriebegehäusebodens ausgebildet ist.

9. Stellantrieb nach einem der vorhergehenden Ansprüche, **dadurch gekennzeichnet, dass** das Schneckenrad (6) zumindest den Zahnkranz (11), eine Radscheibe (25) und ein Abtriebsritzel oder eine Abtriebswelle (14) aufweist, wobei die einzelnen Teile jeweils drehfest verbunden, insbesondere zusammen einstückig ausgeformt sind.

10. Stellantrieb nach einem der vorhergehenden Ansprüche, **dadurch gekennzeichnet, dass** das Getriebegehäuse (10) und/oder das Schneckenrad (6) aus einem Kunststoff, insbesondere aus einem Thermoplast, mittels eines Spritzgussverfahrens hergestellt sind.
